# FASCICULE DE BREVET EUROPEEN

(11) **EP 2 934 990 B1**
(45) Date de publication et mention de la délivrance du brevet: **18.04.2018**
(21) Numéro de dépôt: 13802931.9
(22) Date de dépôt: 05.12.2013
(51) Int. Cl.: B62D 25/20

(54) **AGENCEMENT D'UNE STRUCTURE DE SOUBASSEMENT D'UN VÉHICULE AUTOMOBILE AVEC UNE ENCEINTE RENFERMANT UN DISPOSITIF DE COMMANDE DE COUPE-CIRCUIT**
ANORDNUNG FÜR EINE MECHANISCHE BASISSTRUKTUR EINES KRAFTFAHRZEUGS MIT EINEM GEHÄUSE MIT EINER VORRICHTUNG ZUR STEUERUNG EINER SICHERUNG
ARRANGEMENT FOR A MECHANICAL BASE STRUCTURE OF A MOTOR VEHICLE HAVING AN ENCLOSURE CONTAINING A DEVICE FOR CONTROLLING A FUSE

(30) Priorité: 18.12.2012 FR 1262216
(43) Date de publication de la demande: 28.10.2015
(73) Titulaire: Renault S.A.S., 92100 Boulogne-Billancourt (FR)
(72) Inventeur: MAUDUIT, Thomas, F-78370 Plaisir (FR); CAMUS, Guillaume, F-78280 Guyancourt (FR); BISROR, Olivier, F-92350 Le Plessis Robinson (FR)
(86) Numéro de dépôt international: PCT/EP2013/075675
(87) Numéro de publication internationale: WO 2014/095394

(56) Documents cités:
- EP-A1- 2 402 192
- JP-A- H06 344 950
- JP-A- H07 156 826
- JP-A- 2000 001 147
- JP-A- 2000 038 035

## Description

### Domaine technique de l'invention

L'invention concerne un agencement pour véhicule automobile à traction électrique ou hybride, comprenant :
- au moins une partie d'habitacle dudit véhicule, notamment une partie avant de l'habitacle,
- une structure de soubassement délimitant le bas de ladite partie d'habitacle,
- un dispositif de commande de coupe-circuit électrique configuré de sorte à être associé à une batterie d'alimentation de puissance alimentant électriquement un moteur électrique de traction dudit véhicule.

### État de la technique

Classiquement, un véhicule automobile à traction électrique ou hybride comprend au moins un moteur électrique de traction alimenté en énergie électrique par au moins une batterie de puissance solidaire du véhicule. Pour conférer une sécurité réglementaire d'un point de vue électrique, le véhicule automobile est normalement équipé d'un dispositif de commande de coupe-circuit associé à la batterie de puissance. L'actionnement manuel du dispositif de commande de coupe-circuit, qui peut prendre la forme d'un fusible, par exemple solidaire du boîtier de la batterie de puissance, permet sélectivement d'activer ou de désactiver l'alimentation électrique conférée par la batterie de puissance. Il est connu d'implanter un tel dispositif de commande de coupe-circuit au niveau d'un passage de roue arrière ou au niveau d'un tunnel de soubassement.

La problématique ici est le manque de protection du dispositif de commande de coupe-circuit, le manque de fiabilité d'accès au dispositif de commande de coupe-circuit en cas de besoin (par exemple dans le cas d'une intervention sur le véhicule par un réparateur ou un pompier), le manque de sécurité conférée (notamment en raison de la possibilité d'accès au dispositif de commande de coupe-circuit par un enfant ou pour le moins une personne non autorisée), le manque de fiabilité dans le temps notamment en ce qui concerne l'étanchéité vis-à-vis du dispositif de commande de coupe-circuit.

Le document JPH06344950 divulgue un agencement pour véhicule automobile à traction électrique, comprenant au moins une partie d'habitacle du véhicule, un dispositif de coupe-circuit électrique configuré de sorte à être associé à une batterie d'alimentation de puissance alimentant électriquement un moteur électrique de traction du véhicule, une structure de soubassement délimitant le bas de la partie d'habitacle et comprenant une enceinte renfermant le dispositif de coupe-circuit et fixée dans un logement.

### Objet de l'invention

Le but de la présente invention est de proposer un agencement pour véhicule automobile à traction électrique ou hybride qui remédie aux inconvénients listés ci-dessus.

Notamment, un objet de l'invention est de fournir un tel agencement, permettant d'améliorer :
- la protection du dispositif de commande de coupe-circuit,
- la fiabilité d'accès au dispositif de commande de coupe-circuit en cas de besoin, par exemple dans le cas d'une intervention sur le véhicule par un réparateur ou par un pompier,
- la sécurité conférée par l'agencement, notamment en supprimant la possibilité d'accès au dispositif de commande de coupe-circuit par un enfant ou pour le moins par une personne non autorisée,
- la fiabilité dans le temps de l'agencement, notamment en ce qui concerne l'étanchéité vis-à-vis du dispositif de commande de coupe-circuit.

Il est parvenu à ces objectifs par un agencement pour véhicule automobile à traction électrique ou hybride, comprenant :
- au moins une partie d'habitacle dudit véhicule, notamment une partie avant de l'habitacle,
- une structure de soubassement délimitant le bas de ladite partie (A) d'habitacle,
- un dispositif de commande de coupe-circuit électrique configuré de sorte à être associé à une batterie d'alimentation de puissance alimentant électriquement un moteur électrique de traction dudit véhicule, la structure de soubassement comprenant un logement accessible depuis ladite partie d'habitacle et l'agencement comprend une enceinte renfermant ledit dispositif de commande de coupe-circuit et fixée dans ledit logement de sorte que ledit dispositif de commande de coupe-circuit est accessible depuis ladite partie d'habitacle.

L'agencement est remarquable en ce que l'enceinte comprend d'une part un boîtier fixé à la structure de soubassement dans ledit logement, dans lequel ledit dispositif de commande de coupe-circuit est disposé et d'autre part un couvercle accessible depuis ladite partie d'habitacle, configurés de sorte que l'enceinte forme, dans une première configuration du couvercle, une cage de faraday à l'intérieur de laquelle est placé ledit dispositif de commande de coupe-circuit et isolant ladite partie d'habitacle d'un champ magnétique émis par ledit dispositif de commande de coupe-circuit.. L'agencement est également remarquable en ce que le couvercle, accessible depuis ladite partie d'habitacle et monté de manière amovible par rapport au boîtier peut varier entre la première configuration et une deuxième configuration dans lesquelles respectivement il interdit et il autorise l'accès à une personne au dispositif de commande de coupe-circuit depuis la partie d'habitacle.

Le boîtier et le couvercle peuvent être formés dans une matière métallique.

L'enceinte peut comprendre au moins un dispositif d'assemblage entre le couvercle et le boîtier susceptible d'occuper un état de verrouillage bloquant le couvercle au boîtier dans la première configuration du couvercle et un état de déverrouillage permettant le passage du couvercle vers la deuxième configuration, chaque dispositif d'assemblage comprenant un élément électriquement conducteur configuré de sorte à assurer une continuité électrique entre le boîtier et le couvercle dans l'état de verrouillage du dispositif d'assemblage.

Le boîtier et/ou le couvercle peuvent comprendre des zones épargnées par un traitement de cataphorèse et chaque élément électriquement conducteur est alors en contact avec lesdites zones.

L'enceinte peut comprendre au moins un joint d'étanchéité placé entre le couvercle et le boîtier dans la première configuration du couvercle et chaque dispositif d'assemblage comprend des éléments de serrage rapprochant automatiquement le couvercle et le boîtier, lors du passage de chaque dispositif d'assemblage vers l'état de verrouillage, de sorte à assurer une mise en compression du joint d'étanchéité.

Il peut être fait en sorte que d'un côté opposé au couvercle, le boîtier comprenne une ouverture communiquant entre l'intérieur et l'extérieur de l'enceinte et traversée par une partie du dispositif de commande de coupe-circuit.

L'agencement peut comprendre une batterie d'alimentation de puissance destinée à alimenter électriquement un moteur électrique de traction du véhicule et ledit dispositif de commande de coupe-circuit peut être solidaire de la batterie de puissance.

L'enceinte peut comprendre des éléments structurels configurés de sorte que l'enceinte constitue une partie structurelle amovible de châssis du véhicule apte à être fixée à une partie non amovible de châssis formée par la structure de soubassement d'une manière telle que l'ensemble constitué par la structure de soubassement et l'enceinte fixée dans le logement formé dans la structure de soubassement constitue un plancher structurel du châssis au niveau de ladite partie d'habitacle.

L'agencement peut comprendre un siège pour un passager avant fixé à la structure de soubassement et disposé dans ladite partie d'habitacle et l'enceinte peut être aménagée en devant dudit siège suivant une direction longitudinale de l'agencement correspondant à la direction d'avancement du véhicule.

### Description sommaire des dessins

D'autres avantages et caractéristiques ressortiront plus clairement de la description qui va suivre de modes particuliers de réalisation de l'invention donnés à titre d'exemples non limitatifs et représentés sur les dessins annexés, dans lesquels :
- la figure 1 est une vue en éclaté d'un exemple d'enceinte pour un agencement selon l'invention,
- la figure 2 est une vue en perspective de dessus d'un exemple d'agencement selon l'invention, comportant une enceinte selon la figure 1,
- la figure 3 est une vue similaire à la figure 2, le couvercle de l'enceinte étant retiré,
- la figure 4 est une vue en coupe selon un plan longitudinal-vertical passant par l'enceinte, de l'agencement des figures 2 et 3,
- et la figure 5 représente une partie de l'agencement selon les figures précédentes, l'enceinte de la figure 1 étant retirée.

### Description de modes préférentiels de l'invention

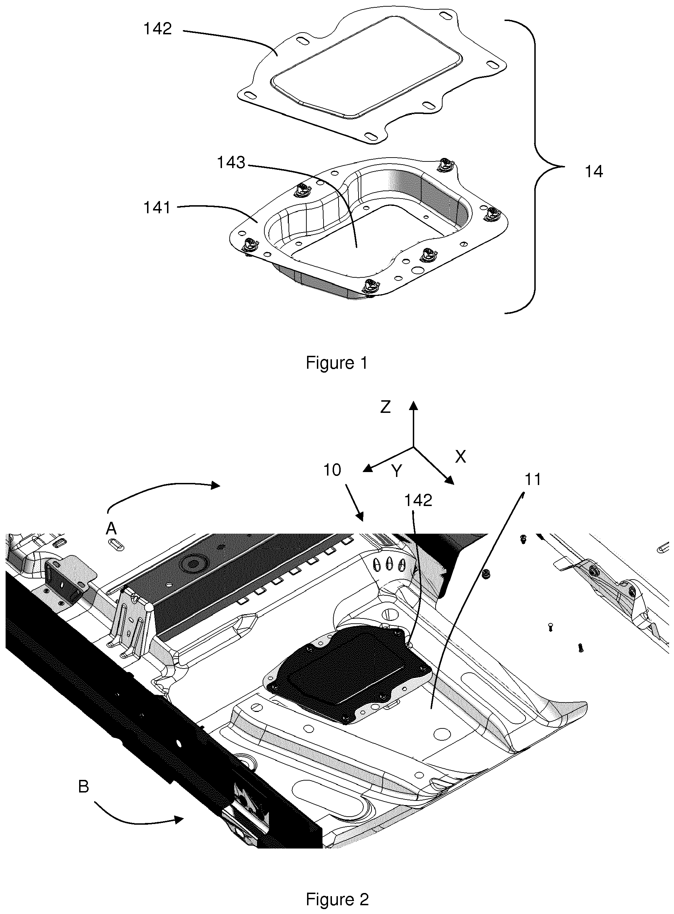

L'invention qui concerne un agencement 10 pour véhicule automobile à traction électrique ou hybride tel que décrit ci-dessous, sera décrite ci-dessous en référence aux figures 1 à 5.

Pour plus de clarté, il est défini un repère orthonormé associé à l'agencement, avec une direction longitudinale repérée « X » correspondant à la direction avant-arrière d'avancement du véhicule automobile durant sa marche avant ou sa marche arrière, une direction transversale repérée « Y » correspondant à la direction gauche-droite horizontale et perpendiculaire à la direction longitudinale X, une direction verticale repérée « Z » correspondant à la direction verticale conjointement perpendiculaire aux directions longitudinale X et transversale Y.

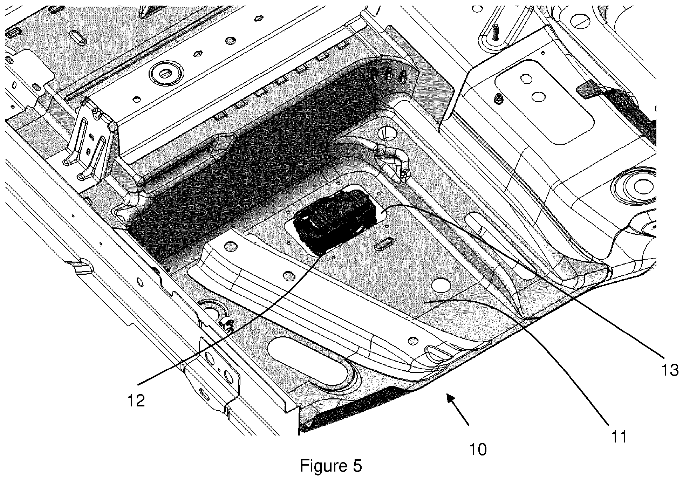

De manière générale et de la manière représentée sur les figures 2 à 5, l'agencement 10 pour véhicule automobile à traction électrique ou hybride, comprend :
- au moins une partie d'habitacle A dudit véhicule,
- une structure de soubassement 11 délimitant le bas de cette partie A d'habitacle,
- et un dispositif de commande de coupe-circuit électrique 12 (représenté uniquement sur la figure 5) configuré de sorte à être associé électriquement à une batterie d'alimentation de puissance (non représentée) alimentant électriquement un moteur électrique de traction (non représenté) du véhicule.

Le dispositif de commande de coupe-circuit 12 n'est donc pas un simple fusible classique d'électronique de bord du véhicule mais présente au contraire toutes les caractéristiques techniques, par exemple une capacité de puissance, d'intensité, de tension, lui permettant de remplir sa fonction en relation avec une batterie de puissance.

Il s'agit notamment d'une partie A avant de l'habitacle suivant la direction longitudinale X. L'habitacle correspond à une zone du véhicule destinée à loger les personnes transportées. Elle est délimitée vers le bas selon Z par la partie du châssis formant le soubassement du châssis, vers l'avant selon X par la planche de bord et le pare-brise (non représentés), vers l'arrière selon X par le coffre ou équivalent (non représenté), et éventuellement vers le dessus par un toit ou pavillon (non représenté) du véhicule. L'habitacle est aussi délimité sur les côtés latéraux selon Y par la présence des portes latérales (non représentées) du véhicule.

La structure de soubassement 11, du côté opposé selon la direction verticale Z par rapport à la partie A d'habitacle qu'elle délimite vers le dessus selon la direction verticale Z, délimite vers le bas la partie B de dessous du véhicule configurant la garde au sol du véhicule lorsque ce dernier est sur le sol.

Selon une caractéristique essentielle de l'agencement 10, la structure de soubassement 11 comprend un logement 13 (figure 5) accessible depuis la partie A d'habitacle et l'agencement 10 comprend une enceinte 14 (visible en détail sur la figure 1) renfermant le dispositif de commande de coupe-circuit 12 et fixée dans le logement 13 de sorte que le dispositif de commande de coupe-circuit 12 est accessible depuis la partie A d'habitacle, par le dessus de la structure de soubassement 11 selon Z.

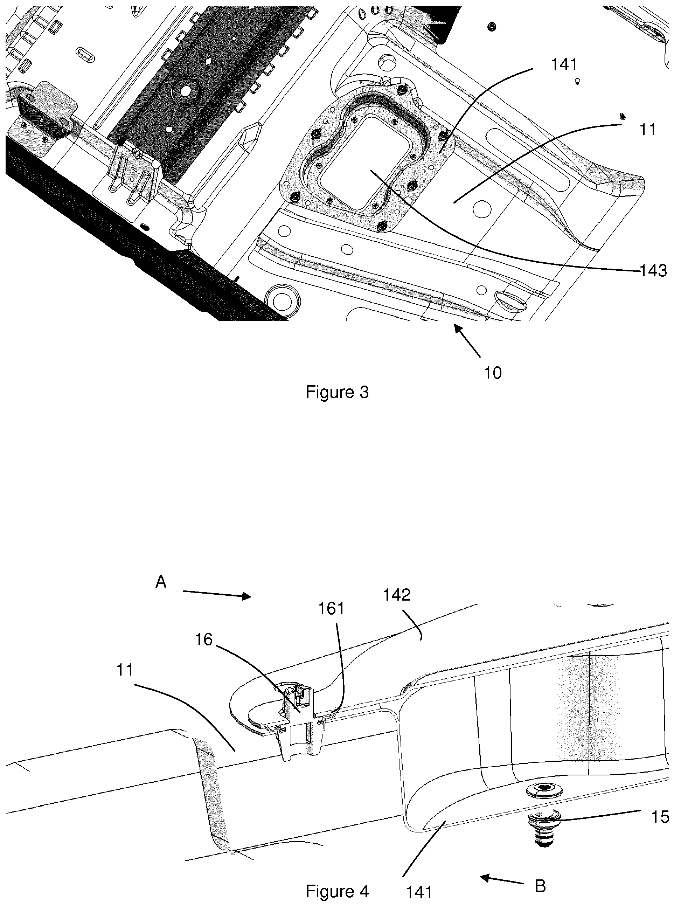

En référence à la figure 1, l'enceinte 14 comprend d'une part un boîtier 141 fixé à la structure de soubassement 11 dans le logement 13, d'autre part un couvercle 142 accessible depuis la partie A d'habitacle et monté de manière amovible par rapport au boîtier 141 d'une manière telle que le couvercle 142 varie entre :
- une première configuration (figures 2 et 4) dans laquelle il interdit l'accès à une personne au dispositif de commande de coupe-circuit 12 depuis la partie A d'habitacle,
- et une deuxième configuration (figure 3) dans laquelle il autorise l'accès à une personne au dispositif de commande de coupe-circuit 12 depuis la partie A d'habitacle.

Le dispositif de commande de coupe-circuit 12 est disposé dans le boîtier 141. Le fond de boîtier 141, c'est-à-dire du côté opposé à la zone du boîtier 141 destinée à être en contact avec le couvercle 142 lorsqu'il est en place dans la première configuration, peut être plein (d'une manière non représentée) ou bien au contraire il peut être prévu, de la manière représentée, que d'un côté opposé au couvercle 142, le boîtier 141 comprenne une ouverture 143 communiquant entre l'intérieur et l'extérieur de l'enceinte 14 et traversée par une partie du dispositif de commande de coupe-circuit 12.

Les figures 2 et 4 montrent donc, du côté de la partie A d'habitacle, que le couvercle 142 est en position accessible depuis l'habitacle tout en assurant la fermeture de l'enceinte 14 vers le dessus selon Z, en direction de la partie A d'habitacle. Cela correspond à la première configuration. Au contraire, la figure 3 correspond à la deuxième configuration dans laquelle le couvercle 142 est retiré depuis le boîtier 141 afin de donner accès par le dessus selon Z, depuis la partie A d'habitacle, à l'intérieur de l'enceinte 14, en particulier pour permettre l'accès au dispositif de commande de coupe-circuit 12.
Sur la figure 5 par contre, toute l'enceinte 14 est retirée hors du logement 13 afin de permettre d'illustrer la présence du dispositif de commande de coupe-circuit 12. Ainsi, il peut être vu que la structure de soubassement 11 est évidée pour permettre de laisser passer au moins une partie du dispositif de commande de coupe-circuit 12 vers le haut selon Z en direction de la partie A d'habitacle. Par exemple, le dispositif de commande de coupe-circuit 12 peut s'étendre, à travers cet évidement, en provenance depuis la partie B sous la structure de soubassement 11 et/ou depuis l'épaisseur de la structure de soubassement 11.
La fixation du boîtier 141 sur la structure de soubassement 11 peut être obtenu par tout moyen, réversible ou à demeure, assurant une fixation fiable du boîtier 141. Il s'agit notamment d'une solution par rivetage qui fournit de bons résultats en termes de fiabilité, de simplicité et de qualité de la fixation. La figure 4 représente l'un des six rivets 15. Cette solution permet également de ne pas nécessiter de joint d'étanchéité entre le boîtier 141 et la structure de soubassement. Cette étanchéité est assurée par un masticage de la zone et des têtes de rivet.
Le boîtier 141 et le couvercle 142 peuvent être formés dans tout matériau suffisamment rigide. Toutefois, avantageusement, ils sont notamment formés dans une matière métallique, selon une caractéristique essentielle de l'invention, sont configurés de sorte que l'enceinte 14 forme, dans la première configuration du couvercle 142, une cage de faraday à l'intérieur de laquelle est placé le dispositif de commande de coupe-circuit 12. Cette cage de faraday a pour effet d'isoler la partie A d'habitacle de tout champ magnétique susceptible d'être émis par le dispositif de commande de coupe-circuit 12 depuis l'intérieur de l'enceinte 14.

L'enceinte 14 comprend au moins un dispositif d'assemblage 16 (figure 4) entre le couvercle 142 et le boîtier 141 susceptible d'occuper un état de verrouillage bloquant (figures 2 et 4) le couvercle 142 au boîtier 141 dans la première configuration du couvercle 142 et un état de déverrouillage permettant la passage du couvercle 142 vers la deuxième configuration (figure 3). Dans un mode particulier de réalisation, chaque dispositif d'assemblage 16 comprend avantageusement un élément électriquement conducteur 161, par exemple sous la forme d'une rondelle, configuré de sorte à assurer une continuité électrique entre le boîtier 141 et le couvercle 142 dans l'état de verrouillage du dispositif d'assemblage. Un tel dispositif d'assemblage 16 et un tel élément électriquement conducteur 161 peuvent adopter toute conception adaptée à leurs fonctions. La structure illustrée à la figure 4 n'est donc qu'un exemple de réalisation non limitatif. L'élément électriquement conducteur 161 permet, par la continuité électrique qu'il confère, de constituer une enceinte 14 formant une cage de faraday.

Durant la fabrication de l'enceinte 14, il pourra être prévu un traitement de cataphorèse du boîtier 141 et du couvercle 142. Toutefois, le boîtier 141 et/ou le couvercle 142 comprendront des zones épargnées par ce traitement de cataphorèse. L'élément électriquement conducteur 161 est alors en contact avec lesdites zones épargnées afin d'assurer la continuité électrique entre le boîtier 141 et le couvercle 142 telle que détaillée ci-dessus.

Le dispositif d'assemblage peut être constitué par une pluralité de vis, par exemple de type quart de tour, réparties sur le pourtour du couvercle 142. Les vis comportent chacune une empreinte de type cruciforme pour une clé universelle du type pompier.

L'agencement 10 peut comprendre aussi un siège (non représenté) pour assurer l'assise d'un passager avant. Ce siège est fixé à la structure de soubassement 11 et est disposé dans la partie A d'habitacle. Dans ce cas particulier non limitatif dans l'emplacement de la partie A de l'habitacle, l'enceinte 14 est aménagée en devant de ce siège suivant la direction longitudinale X de l'agencement.

L'agencement 10 comprend, comme indiqué précédemment, une batterie d'alimentation de puissance (non représentée) destinée à alimenter électriquement un moteur électrique de traction (non représenté) du véhicule. Dans un mode particulier de réalisation toutefois non exclusif, le dispositif de commande de coupe-circuit 12 est solidaire de cette batterie de puissance.

L'enceinte 14 comprend au moins un joint d'étanchéité (non représenté) placé entre le couvercle 142 et le boîtier 141 lorsque le couvercle 142 adopte sa première configuration. Chaque dispositif d'assemblage 16 comprend des éléments de serrage (non représentés en détail) rapprochant automatiquement le couvercle 142 et le boîtier 141, lors du passage du dispositif d'assemblage 16 vers l'état de verrouillage, de sorte à assurer une mise en compression de ce joint d'étanchéité.

Une bande est laissée libre au niveau de l'ouverture pratiquée dans la structure de soubassement 11 pour permettre le masticage de la zone, évoqué précédemment. De plus, une garniture intérieure (moquette, tapis, etc.) (non représentée) peut être fixée par-dessus le couvercle 142 lorsque celui-ci est dans la première configuration.

Enfin, l'enceinte 14 peut éventuellement présenter une fonction structurelle, c'est-à-dire de renforcement en ce sens qu'elle participe à la constitution du châssis du véhicule. L'enceinte 14 comprend alors des éléments structurels configurés de sorte que l'enceinte 14 constitue une partie structurelle amovible de châssis du véhicule apte à être fixée à une partie non amovible de châssis formée par la structure de soubassement 11 d'une manière telle que l'ensemble constitué par la structure de soubassement 11 et l'enceinte 14 fixée dans le logement 13 formé dans la structure de soubassement 11 constitue un plancher structurel du châssis au niveau de la partie A d'habitacle. Ces éléments structurels sont constitués par des formes (nervures, renforts, bossages, renflements), des choix de matériaux, des dimensions, des épaisseurs, adaptées de sorte à remplir une fonction telle que définie ci-dessus.

Ainsi, un telle enceinte 14 structurelle permet de répondre aux différentes sollicitations en cas de chocs et elle résiste aux tests de validation « Isofix » (c'est-à-dire qu'il permet le positionnement d'une béquille sur le couvercle 142, laquelle béquille est associée à un siège enfant positionné sur le siège passager avant).

De ce qui précède, il est compris que l'agencement 10 résout le problème de l'accès et de la protection du dispositif de commande de coupe-circuit électrique 12 associé à la batterie de puissance pour la traction du véhicule. Grâce au logement 13 et à l'enceinte 14, il est facilement accessible notamment pour les pompiers, mais son accès n'est pas trop aisé non plus, notamment pour éviter qu'un enfant puisse le faire. D'autre part, l'agencement 10 garantit l'étanchéité et un cycle de vie d'au moins 60 ouvertures de l'enceinte 14.

## Revendications

1. Agencement (10) pour véhicule automobile à traction électrique ou hybride, comprenant :
- au moins une partie (A) d'habitacle dudit véhicule, notamment une partie avant de l'habitacle,
- un dispositif de commande de coupe-circuit électrique (12) configuré de sorte à être associé à une batterie d'alimentation de puissance alimentant électriquement un moteur électrique de traction dudit véhicule,
- une structure de soubassement (11) délimitant le bas de ladite partie (A) d'habitacle et comprenant un logement (13) accessible depuis ladite partie (A) d'habitacle, et
- une enceinte (14) renfermant ledit dispositif de commande de coupe-circuit (12) et fixée dans ledit logement (13) de sorte que ledit dispositif de commande de coupe-circuit (12) est accessible depuis ladite partie (A) d'habitacle,
**agencement (10) caractérisé en ce que** l'enceinte (14) comprend d'une part un boîtier (141) fixé à la structure de soubassement (11) dans ledit logement (13), dans lequel ledit dispositif de commande de coupe-circuit (12) est disposé et d'autre part un couvercle (142) accessible depuis ladite partie (A) d'habitacle et monté de manière amovible par rapport au boîtier (141) d'une manière telle que le couvercle (142) varie entre une première et une deuxième configurations dans lesquelles respectivement il interdit et il autorise l'accès à une personne audit dispositif de commande de coupe-circuit (12) depuis ladite partie (A) d'habitacle, d'habitacle et monté de manière amovible par rapport au boîtier (141) d'une manière telle que le couvercle (142) varie entre une première et une deuxième configurations dans lesquelles respectivement il interdit et il autorise l'accès à une personne audit dispositif de commande de coupe-circuit (12) depuis ladite partie (A) d'habitacle. le boîtier (141) et le couvercle (142) étant configurés de sorte que l'enceinte (14) forme, dans une première configuration du couvercle (142), une cage de faraday à l'intérieur de laquelle est placé ledit dispositif de commande de coupe-circuit (12) et isolant ladite partie (A) d'habitacle d'un champ magnétique émis par ledit dispositif de commande de coupe-circuit (12).

2. Agencement (10) selon la revendication 1, **caractérisé en ce que** le boîtier (141) et le couvercle (142), sont formés dans une matière métallique.

3. Agencement (10) selon la revendication 2, **caractérisé en ce que** l'enceinte (14) comprend au moins un dispositif d'assemblage (16) entre le couvercle (142) et le boîtier (141) susceptible d'occuper un état de verrouillage bloquant le couvercle (142) au boîtier (141) dans la première configuration du couvercle (142) et un état de déverrouillage permettant la passage du couvercle (142) vers la deuxième configuration, chaque dispositif d'assemblage (16) comprenant un élément électriquement conducteur (161) configuré de sorte à assurer une continuité électrique entre le boîtier (141) et le couvercle (142) dans l'état de verrouillage du dispositif d'assemblage (16).

4. Agencement (10) selon la revendication 3, **caractérisé en ce que** le boîtier (141) et/ou le couvercle (142) comprennent des zones épargnées par un traitement de cataphorèse et **en ce que** chaque élément électriquement conducteur (161) est en contact avec lesdites zones.

5. Agencement (10) selon l'une des revendications 3 ou 4, **caractérisé en ce que** l'enceinte (14) comprend au moins un joint d'étanchéité placé entre le couvercle (142) et le boîtier (141) dans la première configuration du couvercle (142) et **en ce que** chaque dispositif d'assemblage (16) comprend des éléments de serrage rapprochant automatiquement le couvercle (142) et le boîtier (141), lors du passage de chaque dispositif d'assemblage (16) vers l'état de verrouillage, de sorte à assurer une mise en compression du joint d'étanchéité.

6. Agencement (10) selon l'une des revendications 2 à 5, **caractérisé en ce que,** d'un côté opposé au couvercle (142), le boîtier (141) comprend une ouverture (143) communiquant entre l'intérieur et l'extérieur de l'enceinte (14) et traversée par une partie du dispositif de commande de coupe-circuit (12).

7. Agencement (10) selon l'une des revendications 1 à 6, **caractérisé en ce qu'**il comprend une batterie d'alimentation de puissance destinée à alimenter électriquement un moteur électrique de traction du véhicule et **en ce que** ledit dispositif de commande de coupe-circuit (12) est solidaire de la batterie de puissance.

8. Agencement (10) selon l'une des revendications 1 à 7, **caractérisé en ce que** l'enceinte (14) comprend des éléments structurels configurés de sorte que l'enceinte (14) constitue une partie structurelle amovible de châssis du véhicule apte à être fixée à une partie non amovible de châssis formée par la structure de soubassement (11) d'une manière telle que l'ensemble constitué par la structure de soubassement (11) et l'enceinte (14) fixée dans le logement (13) formé dans la structure de soubassement (11) constitue un plancher structurel du châssis au niveau de ladite partie (A) d'habitacle.

9. Agencement (10) selon l'une des revendications 1 à 8, **caractérisé en ce que** l'agencement (10) comprend un siège pour un passager avant fixé à la structure de soubassement (11) et disposé dans ladite partie (A) d'habitacle et **en ce que** l'enceinte (14) est aménagée en devant dudit siège suivant une direction longitudinale (X) de l'agencement (10) correspondant à la direction d'avancement du véhicule.

10. Agencement (10) selon l'une des revendications 1 à 9, **caractérisé en ce que** le boîtier (141) est fixé par rivetage à la structure de soubassement (11) dans ledit logement (13).

11. Véhicule automobile à traction électrique ou hybride, comprenant un agencement (10) selon l'une quelconque des revendications précédentes.

## Patentansprüche

1. Anordnung (10) für ein Kraftfahrzeug mit Elektro- oder Hybridantrieb, umfassend:
- wenigstens einen Teil (A) des Innenraums des Fahrzeugs, insbesondere einen Vorderteil des Innenraums,
- eine zum Verbinden mit einer Leistungsversorgungsbatterie zur Stromversorgung eines Antriebselektromotors des Fahrzeugs ausgebildete Stromabschaltungs-Steuervorrichtung (12),
- eine den Unterteil des Teils (A) des Innenraums abgrenzende und eine vom Teil (A) des Innenraums aus zugängliche Aufnahme (13) umfassende Unterbodenstruktur (11), und
- eine die Stromabschaltungs-Steuervorrichtung (12) umschließende und in der Aufnahme (13) befestigte Hülle (14), so dass die Stromabschaltungs-Steuervorrichtung (12) vom Teil (A) des Innenraums aus zugänglich ist,
wobei die Anordnung (10) **dadurch gekennzeichnet ist, dass** die Hülle (14) einerseits ein an der Unterbodenstruktur (11) in der Aufnahme (13) befestigtes Gehäuse (141), in dem die Stromabschaltungs-Steuervorrichtung (12) angeordnet ist, und andererseits einen vom Teil (A) des Innenraums zugänglichen und abnehmbar vom Gehäuse (141) montierten Deckel (142) umfasst, so dass der Deckel (142) zwischen einer ersten und einer zweiten Konfiguration variiert, in denen er jeweils einer Person den Zugang zur Stromabschaltungs-Steuervorrichtung (12) vom Teil (A) des Innenraums aus verhindert und ermöglicht, des Innenraums und abnehmbar vom Gehäuse (141) montiert, so dass der Deckel (142) zwischen einer ersten und einer zweiten Konfiguration variiert, in denen er jeweils einer Person den Zugang zur Stromabschaltungs-Steuervorrichtung (12) vom Teil (A) des Innenraums aus verhindert und ermöglicht, wobei das Gehäuse (141) und der Deckel (142) so ausgebildet sind, dass die Hülle (14) in einer ersten Konfiguration des Deckels (142) einen Faradayschen Käfig bildet, in dem die Stromabschaltungs-Steuervorrichtung (12) angeordnet ist und der den Teil (A) des Innenraums vor einem von der Stromabschaltungs-Steuervorrichtung (12) erzeugten Magnetfeld abschirmt.

2. Anordnung (10) nach Anspruch 1, **dadurch gekennzeichnet, dass** das Gehäuse (141) und der Deckel (142) aus einem Metallmaterial bestehen.

3. Anordnung (10) nach Anspruch 2, **dadurch gekennzeichnet, dass** die Hülle (14) wenigstens eine Montagevorrichtung (16) zwischen dem Deckel (142) und dem Gehäuse (141) umfasst, die ausgebildet ist, einen den Deckel (142) am Gehäuse (141) blockierenden Verriegelungszustand in der ersten Konfiguration des Deckels (142) und einen das Wechseln des Deckels (142) in die zweite Konfiguration ermöglichenden Entriegelungszustand einzunehmen, wobei jede Montagevorrichtung (16) ein elektrisch leitendes Element (161) umfasst, das so ausgebildet ist, dass es einen Stromdurchgang zwischen dem Gehäuse (141) und dem Deckel (142) im Entriegelungszustand der Montagevorrichtung (16) gewährleistet.

4. Anordnung (10) nach Anspruch 3, **dadurch gekennzeichnet, dass** das Gehäuse (141) und/oder der Deckel (142) von einer Kataphoresebehandlung ausgesparte Bereiche umfassen und jedes elektrisch leitende Element (161) in Kontakt mit den Bereichen ist.

5. Anordnung (10) nach Anspruch 3 oder 4, **dadurch gekennzeichnet, dass** die Hülle (14) wenigstens einen zwischen dem Deckel (142) und dem Gehäuse (141) in der ersten Konfiguration des Deckels (142) angeordneten Dichtring umfasst und dass jede Montagevorrichtung (16) automatisch den Deckel (142) und das Gehäuse (141) beim Wechsel von jeder Montagevorrichtung (16) in den Verriegelungszustand annähernde Spannelemente umfasst, so dass ein Andrücken des Dichtrings gewährleistet ist.

6. Anordnung (10) nach einem der Ansprüche 2 bis 5, **dadurch gekennzeichnet, dass** an einer Seite gegenüber dem Deckel (142) das Gehäuse (141) eine Innenseite und Außenseite der Hülle (14) verbindende und von einem Teil der Stromabschaltungs-Steuervorrichtung (12) durchquerte Öffnung (143) umfasst.

7. Anordnung (10) nach einem der Ansprüche 1 bis 6, **dadurch gekennzeichnet, dass** sie eine zur Stromversorgung eines Antriebselektromotors des Fahrzeugs ausgebildete Leistungsversorgungsbatterie umfasst und dass die Stromabschaltungs-Steuervorrichtung (12) mit der Leistungsbatterie verbunden ist.

8. Anordnung (10) nach einem der Ansprüche 1 bis 7, **dadurch gekennzeichnet, dass** die Hülle (14) Strukturelemente umfasst, die so ausgebildet sind, dass die Hülle (14) einen abnehmbaren Strukturteil des Chassis des Fahrzeugs bildet, der ausgebildet ist, an einem nicht abnehmbaren Teil des Chassis, gebildet durch die Unterbodenstruktur (11), so befestigt zu werden, dass die von der Unterbodenstruktur (11) und der in der von der Unterbodenstruktur (11) gebildeten Aufnahme (13) befestigten Hülle (14) gebildete Einheit einen Strukturboden des Chassis auf Höhe des Teils (A) des Innenraums bildet.

9. Anordnung (10) nach einem der Ansprüche 1 bis 8, **dadurch gekennzeichnet, dass** die Anordnung (10) einen an der Unterbodenstruktur (11) und im Teil (A) des Innenraums angeordneten Sitz für einen Fahrer/Beifahrer umfasst und dass die Hülle (14) vor dem Sitz in einer Längsrichtung (X) der Anordnung (10) entsprechend der Fortbewegungsrichtung des Fahrzeugs angeordnet ist.

10. Anordnung (10) nach einem der Ansprüche 1 bis 9, **dadurch gekennzeichnet, dass** das Gehäuse (141) durch Nieten an die Unterbodenstruktur (11) in der Aufnahme (13) befestigt wird.

11. Kraftfahrzeug mit Elektro- oder Hybridantrieb, umfassend eine Anordnung (10) nach einem der vorhergehenden Ansprüche.

## Claims

1. Arrangement (10) for an electric or hybrid motor vehicle, comprising
- at least one portion (A) of the passenger compartment of said vehicle, in particular a front portion of the passenger compartment,
- an electrical device for controlling a circuit breaker (12), said device being configured so as to be joined to a power supply battery supplying electrical power to an electric drive motor of said vehicle,
- a mechanical base structure (11) delimiting the bottom of said portion (A) of the passenger compartment and comprising a recess (13) accessible from said portion (A) of the passenger compartment, and
- an enclosure (14) that contains said device for controlling a circuit breaker (12) and is fixed in said recess (13) such that said device for controlling a circuit breaker (12) is accessible from said portion (A) of the passenger compartment,
**said arrangement (10) being characterized in that** the enclosure (14) comprises on the one hand a housing (141) fixed to the mechanical base structure (11) in said recess (13), in which housing said device for controlling a circuit breaker (12) is disposed, and on the other hand a cover (142) accessible from said portion (A) of the passenger compartment and mounted removably in relation to the housing (141) such that the cover (142) varies between a first and a second configuration, in which, respectively, it prevents and allows a person access to said device for controlling a circuit breaker (12) from said portion (A) of the passenger compartment, of the passenger compartment and mounted removably in relation to the housing (141) such that the cover (142) varies between a first and a second configuration, in which, respectively, it prevents and allows a person access to said device for controlling a circuit breaker (12) from said portion (A) of the passenger compartment. The housing (141) and the cover (142), being configured such that the enclosure (14) forms, in a first configuration of the cover (142), a Faraday cage within which said device for controlling a circuit breaker (12) is placed, and isolates said portion (A) of the passenger compartment from a magnetic field emitted by said device for controlling a circuit breaker (12).

2. Arrangement (10) according to Claim 1, **characterized in that** the housing (141) and the cover (142) are made of a metal material.

3. Arrangement (10) according to Claim 2, **characterized in that** the enclosure (14) comprises at least one assembly device (16) between the cover (142) and the housing (141) able to occupy a locking state blocking the cover (142) on the housing (141) in the first configuration of the cover (142) and an unlocking state allowing the cover (142) to pass into the second configuration, each assembly device (16) comprising an electrically conductive element (161) configured so as to assure an electrical continuity between the housing (141) and the cover (142) in the locking state of the assembly device (16).

4. Arrangement (10) according to Claim 3, **characterized in that** the housing (141) and/or the cover (142) comprise zones free from an electrophoretic treatment, and **in that** each electrically conductive element (161) is in contact with said zones.

5. Arrangement (10) according to either of Claims 3 and 4, **characterized in that** the enclosure (14) comprises at least one gasket placed between the cover (142) and the housing (141) in the first configuration of the cover (142), and **in that** each assembly device (16) comprises clamping elements automatically drawing the cover (142) and the housing (141) together as each assembly device (16) passes into the locking state so as to assure that the gasket is compressed.

6. Arrangement (10) according to one of Claims 2 to 5, **characterized in that,** from a side opposite the cover (142), the housing (141) has an opening (143) communicating between the interior and exterior of the enclosure (14) and through which part of the device for controlling a circuit breaker (12) passes.

7. Arrangement (10) according to one of Claims 1 to 6, **characterized in that** it comprises a power supply battery intended to supply electrical power to an electric drive motor of the vehicle, and **in that** said device for controlling a circuit breaker (12) is connected to the power battery.

8. Arrangement (10) according to one of Claims 1 to 7, **characterized in that** the enclosure (14) comprises structural elements configured such that the enclosure (14) constitutes a removable structural portion of the vehicle chassis able to be fixed to a non-removable portion of the chassis formed by the mechanical base structure (11) such that the assembly formed by the mechanical base structure (11) and the enclosure (14) fixed in the recess (13) formed in the mechanical base structure (11) forms a structural floor of the chassis in said portion (A) of the passenger compartment.

9. The arrangement (10) according to one of Claims 1 to 8, **characterized in that** the arrangement (10) comprises a seat for a front passenger fixed to the mechanical base structure (11) and disposed in said portion (A) of the passenger compartment, and **in that** the enclosure (14) is arranged in front of said seat in a longitudinal direction (X) of the arrangement (10) corresponding to the direction of travel of the vehicle.

10. Arrangment according to one of Claims 1 to 9, **characterized in that** the housing (141) is fixed by riveting to the mechanical base structure (11) in said recess (13).

11. Electric or hybrid motor vehicle comprising an arrangement (10) according to any one of the preceding claims.
